(19) **Europäisches Patentamt**

**European Patent Office**

**Office européen des brevets**

(11) Publication number : **0 350 711 B1**

(12) # EUROPEAN PATENT SPECIFICATION

(45) Date of publication of patent specification :
09.09.92 Bulletin 92/37

(51) Int. Cl.$^5$ : **F16B 39/00, F16B 39/24**

(21) Application number : **89111700.4**

(22) Date of filing : **27.06.89**

(54) Locking device for threaded fastener.

(30) Priority : **14.07.88 US 218837**

(43) Date of publication of application :
**17.01.90 Bulletin 90/03**

(45) Publication of the grant of the patent :
**09.09.92 Bulletin 92/37**

(84) Designated Contracting States :
**AT BE CH DE ES FR GB GR IT LI LU NL SE**

(56) References cited :
**DE-A- 2 649 077**
**FR-A- 2 073 305**
**GB-A- 907 826**

(73) Proprietor : **HONG KONG DISC LOCK COMPANY, LTD.**
**9-F Baskerville House 22 Ice House Street**
**Hong Kong (HK)**

(72) Inventor : **McKinlay, Alistair N.**
**4107 Redwood Avenue**
**Los Angeles California 90066 (US)**

(74) Representative : **Schaumburg, Thoenes & Englaender**
**Mauerkircherstrasse 31 Postfach 86 07 48**
**W-8000 München 86 (DE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This application is a continuation-in-part of application Serial No. 060,901, filed June 12, 1987 for a LOCKING DEVICE FOR THREADED FASTENER.

### Background of the Invention

This invention is related to a fastener assembly having a locking washer connected to a hexagonal nut in such a manner that the nut can be rotated either in one direction to tighten both the nut and the washer on a workpiece, or with the washer in the opposite direction to loosen both the nut and the washer from the workpiece. The washer rides on a skirt carried by the nut so that the washer cannot be reversed when being assembled on the workpiece.

Locking washers, either individually or in a pair, are commonly mounted on the under surface of a bolt head or with a nut where the workpiece is subjected to vibration. Some vibrations tend to cause the bolt or the stud, on which conventional washers are mounted, to elongate thereby loosening the nut. Locking washers, however, tend to remain tight because they have a pair of confronting cam surfaces that rotate one with respect to the other, to accommodate any elongation or contracting of the bolt.

One such locking arrangement is illustrated in United States Patent No. 4,134,438 which issued January 16, 1979 to Bengt O. Frieberg and Arthur B. Herpolsheimer.

Locking washers are commonly used in industry, however, a couple of problems have arisen. When used in an industrial application with relatively unskilled help, the washers are sometimes assembled in a reverse position so that the cam surfaces do not face one another. When so mounted they lose their primary function to respond to changes in bolt length.

Another problem is that when locking washers having a circular edge are locked in position, the bolt cannot be loosened. Any attempt to unscrew the nut or bolt that is on the same side of the workpiece as the washers, simply makes the assembly tighter. The opposite end of the bolt or the stud is usually on the back side of the workpiece. If accessible, the user can loosen the assembly. However, if the opposite end of the stud or bolt is inaccessible, the user has to crack either the nut or the bolt head to remove it from the workpiece.

The prior art suggests that to prevent a nut from being separated from conventional, non-locking applications, a flared end section can be formed on the nut to retain the washer. Such an arrangement is illustrated in United States Patent No. 2,257,479 which issued September 30, 1941 to Carl G. Olson, and United States Patent No. 4,362,449 which issued December 7, 1982 to Emil J. Hlinsky. However, this arrangement provides a permanent fastener assembly.

Locking washers having the same peripheral shape as a cooperating nut, that is a six-sided configuration, are illustrated in United States Patent No. 3,417,802 which issued December 24, 1968 to Carl O. Oldenkott. However, there is no suggestion of this typ of fastener in which the washer is inseparable from the nut before being assembled on the workpiece.

Another lock washer arrangement is illustrated in United States Patent No. 3, 263,727 which issued August 2, 1966 to Arthur B. Herpolsheimer. This fastener also suggests only a separable nut and washer.

GB-A-907 826 shows and describes a fastener assembly according to the preamble of claim 1 with the fastener body and the lock washer defining two separate parts which may be combined and assembled in different ways, only one way being the correct one. By unskilled persons the washers may be assembled in a reverse position so that the cam surfaces do not face one another. Another problem arises in that the washers may be separated from the fastener nut and get lost; in this case the nut too cannot be used. Moreover, the two separate parts are difficult to handle during the assembling procedure.

The broad purpose of the present invention is to provide an improved fastener assembly in which a locking nut is connected to a locking washer by means of a skirt that extends from the nut opening. The washer is mounted on the skirt so as to be rotatable with respect to the washer as well as axially movable to a position in which cooperating cam elements on opposing faces between the washer and the nut are separated. The cam elements are arranged so that when the nut is being fastened, the cam elements engage one another so that the nut rotates the washer.

Both the washer and a portion of the nut have hexagonal configurations so that the washer can be rotated by a wrench in the unfastening direction to remove both the washer and the nut from the workpiece.

This arrangement obviates the problem of removing the nut from a stud after it has been fastened on a workpiece in a position in which the opposite end of the stud is inaccessible to the user. The nut does not have to be cracked to remove the fastener assembly from the workpiece.

The washer has a wide circular base to enlarge the surface area between the washer and the workpiece. Preferably, teeth are mounted on the face of the washer engaging the workpiece to improve the seizure between the washer and the workpiece.

Still further objects and advantages of the invention will become readily apparent to those skilled in the art to which the invention pertains upon reference to the following detailed description.

## Description of the Drawings

The description refers to the accompanying drawings in which like reference characters refer to like parts throughout the several views and in which:

FIGURE 1 is a view illustrating a fastener assembly embodying the invention being tightened on a workpiece;

FIGURE 2 is a view similar to Figure 1, but showing a wrench mounted on both the nut and the washer to loosen the assembly from the workpiece;

FIGURE 3 is a sectional view showing the nut and washer assembly;

FIGURE 4 is a view of the top of the nut;

FIGURE 5 is a view of the bottom of the nut as seen along line 5-5 of Figure 3;

FIGURE 6 is a view of the top of the washer;

FIGURE 7 is a view of the bottom of the washer;

FIGURE 8 is an enlarged view of one of the teeth mounted on the washer; and

FIGURE 9 is a fragmentary view of the opposing cam elements.

## Description of the Preferred Embodiment

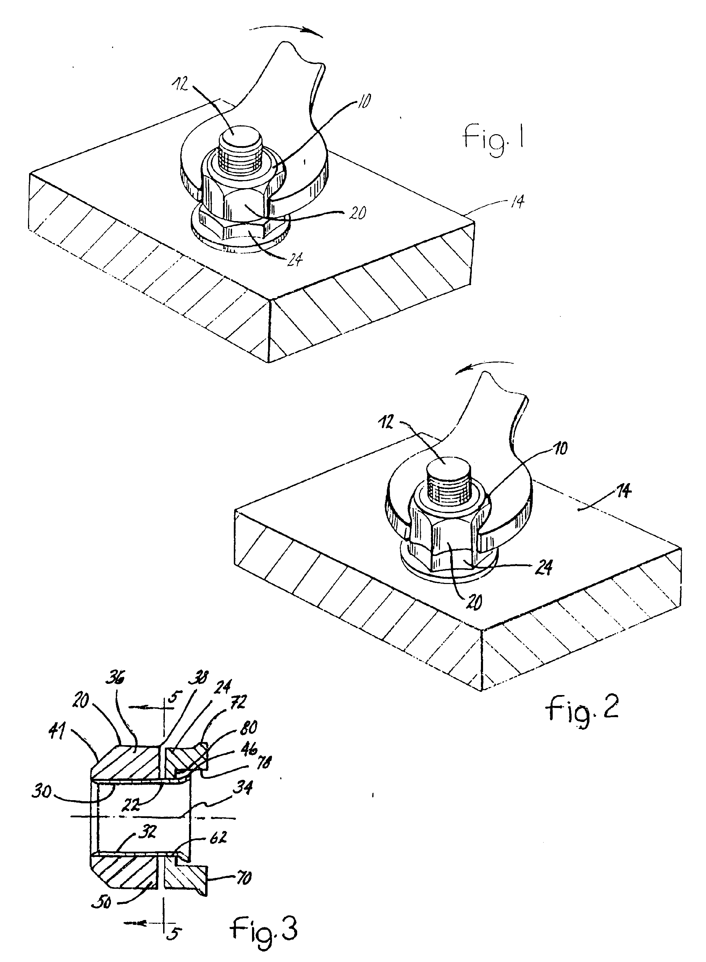

Referring to the drawings, Figures 1-2 illustrate a fastener means, generally indicated at 10, mounted on a threaded stud 12 which is secured to a workpiece 14.

A wrench 16 is used for tightening the fastener means on the stud in the clockwise direction, as illustrated in Figure 1, to apply a load on the workpiece. The wrench is rotated in the opposite direction, as illustrated in Figure 2, for loosening the fastener means and releasing the load on the workpiece.

Referring to Figures 1-3, the fastener means comprises a nut 20 having an integral skirt 22, and a locking washer 24.

Referring to Figures 3, 4 and 5, the nut has a six-sided conventional hexagonal external configuration 28 engaged with wrench 16 having a conventional nut-receiving opening. The nut has an internal opening 30 having threaded means 32 formed in a generally cylindrical configuration about an axis of rotation 34.

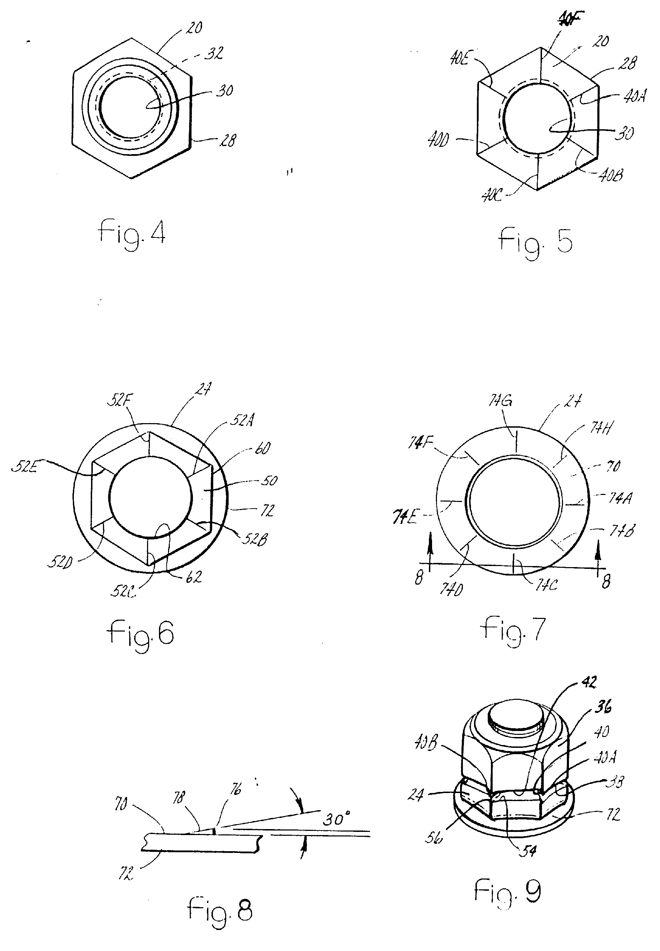

The nut has a body 36 with an under surface 38 having cam-engaging means, as illustrated in Figures 5 and 9. The cam- engaging means comprises six cam elements 40A-40F arranged end-to-end, each including an inclined front face 40 and a rearwardly inclined cam surface 42. Each inclined face 40 is located at a corner of the hexagonal nut configuration. The width of each cam element extends from the central opening to the hexagonal corner. The top surface of the fastener body is beveled at 44 to provide a nose for receiving robotic fastening means.

Skirt 22 has a cylindrical configuration and a flared, annular, outer end 46.

Figures 3 and 6-9 illustrate washer 24. Washer 24 has a cam face 50 facing nut surface 38. Face 50 has six cam-engaging elements 52A-F. Each cam-engaging element has an inclined face 54 and a front face 56. Each front face 56 engages a corresponding front face 40 of the nut, as viewed in Figure 9. The inclined cam faces of the washer are adapted to slideably engage the inclined cam faces of the nut when the nut and washer are in contact. When the washer is engaged with the nut, the nut turns the washer when rotated in the clockwise direction, as viewed in Figure 1. The washer will turn the nut when the washer is rotated in the opposite direction.

The upper external portion of the washer has a hexagonal configuration 60, with the same diameter as the hexagonal configuration 28 of the nut. However, the diameter of hexagonal configuration 60 can be larger or smaller than the nut so long as the washer can be engaged by a wrench to loosen the washer from the workpiece. Preferably, the hexagonal configuration of the washer is the same as the nut so that a single wrench 16 can engage both the washer and the nut when their hexagonal corners are aligned, one with the other.

The washer has a central opening 62 which is slideably mounted on the cylindrical skirt.

Each cam element on the washer extends from opening 62 to a corner of the hexagonal configuration.

The opposite face 70 of the washer is substantially parallel to cam face 50 and forms the lower surface of an annular lip 72 which enlarges the seizing area between the washer and the workpiece. Face 70 has eight seizing teeth 74A-G, equally spaced around the lower face of the washer. Each of the seizing teeth has a surface 76 that is perpendicular to the face of the washer, and an inclined surface 78 disposed at an angle of about 30 degrees with respect to face 70, as best illustrated in Figure 8.

Referring to Figures 3-6, opening 62 is enlarged at 78 to form a larger opening. Opening 62 has a diameter which slideably accommodates the diameter of the skirt but is less than the diameter of flared outer end 46. The diameter of opening 78 is slightly greater than flared end 46 so that it abuts an annular shoulder 80 when the washer is at the limit of its travel on the skirt.

Thus, the washer is moveable toward the nut to an engaged position in which the cam elements on the washer engage the cam elements on the nut. In this position, the nut and the washer may be rotated either in an opposite direction, or together in the same direction, as illustrated in Figures 1 and 2. The washer is moveable to a separated position in which the cooperating cam elements clear one another so that the washer can be rotated about the skirt.

The fastener assembly is mounted on stud 12 as illustrated in Figure 1. Wrench 16 is employed to engage the nut to rotate it in the clockwise direction so that it applies a load through the washer on the workpiece as the cam elements on the nut engage the cam elements on the washer. The nut then cannot be rotated in the reverse direction. Vibrations which elongate the stud or tend to loosen the nut will merely cause the cam surfaces of the cooperating cam elements to move such that the washer becomes tighter. The reason is because the cam rise angle on the cam elements is greater than the lead angle on the threads of the nut. Any tendency of the nut to become loosened causes the washer to become wedged between the nut and the workpiece.

The fastener assembly can then be loosened either by applying the wrench on the hexagonal configuration of the washer to rotate it in the loosening direction which in turn rotates the nut. The nut and the washer must be aligned so that the wrench 16 can engage both the nut and the washer to rotate them in the loosening direction.

The wide base of the nut provides a substantial surface for engaging the workpiece and makes it more suitable for efficiently and tightly locking the nut in place then can be achieved by comparable nuts with a conventional hexagonal diameter.

## Claims

1. A fastener assembly for releasably applying a load to the surface of a workpiece, comprising a threaded fastener body and a locking washer, the threaded fastener body (36) having an internal opening (30) formed about an axis, and threaded means (32) formed in a generally cylindrical configuration in said opening (30) about said axis; said fastener body (36) having first structure (28) engageable by a tool (16) for rotating the fastener body about said axis in either a first direction for tightening same against a workpiece (14) or in the opposite direction for loosening same from the workpiece (14);

the fastener body (36) having a cam face (38) with a cam element (40A-40F);

a locking washer (24) having a central opening (62), the washer (24) having a cam face (50) with a cam element (52A-52F), the washer (24) having structure engageable by a tool (16) for rotating the washer (24) about said axis with said body (36) for loosening same from the workpiece (14);

characterized in that the fastener body (36) has a skirt (22) extending axially therefrom; the opening (62) of the washer being mounted on the skirt (22) so as to be rotatable about said axis, the washer (24) being axially movable along said skirt (22) to a first axial position and a distance sufficient for the cam element on the washer (24) to pass the cam element on the body (36) as the washer (24) is being rotated on the skirt (22) about said axis;

the cam element (52A-52F) on the locking washer (24) being axially movable on the skirt (22) to a second axial position engageable with the cam element (40A-40F) on the fastener body (36) for cooperating with same to lock the washer (24) against rotation with respect to the fastener body (36), and the skirt (22) and the locking washer (24) having inter-engaging means (46) preventing separation of the locking washer (24) from the skirt (22).

2. A fastener assembly as defined in claim 1, **characterized** in that the tool-engaging structure on both the fastener (36) and the washer (24) are engageable by the same tool for loosening same.

3. A fastener assembly as defined in claim 1 or 2, **characterized** in that the tool-engaging structure on the body (36) is a six-sided structure.

4. A fastener assembly as defined in any one of claims 1 to 3, **characterized** in that the tool-engaging structure on the locking washer (24) is a six-sided structure.

5. A fastener assembly as defined in any one of claims 1 to 4, **characterized** in that the washer (24) has a thickness greater than the axial length of the skirt (22).

6. A fastener assembly as defined in any one of claims 1 to 5, **characterized** in that the fastener-engaging structure on the washer (24), and the fastener body (36) are adapted to be simultaneously engaged by a wrench.

7. A fastener assembly as defined in any one of claims 1 to 6, **characterized** in that a first portion of the washer (24) has a hexagonal tool-engaging section of a first diameter, and a second portion of the washer (24) has a circular configuration of a greater diameter, the second portion being engageable with the workpiece (14).

8. A fastener assembly as defined in anyone of claims 1 to 7, **characterized** in that the fastener body (36) and the washer (24) have cooperating axially directed cam faces (38, 50) opposing one another and, respectively, having wedge-shaped cam means with front faces interengaging when the fastener body (36) is rotated in the tightening direction and inclined ramp faces with a rise angle greater than the lead angle of the thread means (30) of the fastener body (36).

9. A fastener assembly as defined in any one of claims 1 to 8, **characterized** in that the washer(24) has a first body portion and an internally formed second body portion, the first body portion being formed to define a drive head having the cam face (50) and a plurality of wrench-engageable vertical side surfaces (60), and the second body portion being defined by an enlarged radially extending flange member (72) having a substantial flat frictional engaging surface (70) adapted to engage the surface of a workpiece (14) to which is secured said threaded fastener.

10. A fastener assembly as defined in claim 9, **characterized** in that the frictional engaging surface (70) is an annular face generally parallel to and opposite the cam face (50) of the washer (24) and having an outer, generally circular, circumferential border with a diameter at least as great as that of the tool-engaging structure on the locking washer (24), and an inner diameter at least as great as the diameter of the fastener body opening (30), the skirt (22) and the washer (24) having interengaging means (46, 80) to prevent separation of the washer (24) from the skirt (22).

**Patentansprüche**

1. Befestigungsanordnung zum lösbaren Aufbringen einer Kraft auf die Oberfläche eines Werkstücks, umfassend einen mit einem Gewinde versehenen Befestigungskörper und eine Sicherungs-Scheibe, wobei der Befestigungskörper (36) eine um eine Achse angeordnete innere Öffnung hat, sowie ein in der Öffnung (30) um die Achse in einer im allgemeinen zylindrischen Anordnung ausgebildetes Gewinde (32); wobei der Befestigungskörper (36) eine erste Struktur (28) hat, in die ein Werkzeug (16) eingreifen kann, um den Befestigungskörper um die Achse entweder in einer ersten Richtung zum Spannen desselben gegen ein Werkstück (14) oder in die entgegengesetzte Richtung zum Lösen desselben vom Werkstück (14) zu drehen;

wobei der Befestigungskörper (36) eine Nockenfläche (38) mit einem Nockenelement (40A-40F) hat;

und wobei die Sicherungs-Scheibe (24) eine zentrale Öffnung (62), eine Nockenfläche (50) mit einem Nockenelement (52A-52F) und eine Struktur hat, in die ein Werkzeug (16) eingreifen kann, um die Scheibe (24) um die Achse mit dem Befestigungskörper (36) zum Lösen desselben vom Werkstück (14) zu drehen;

dadurch **gekennzeichnet,** daß der Befestigungskörper (36) eine sich von ihm axial erstreckende Einfassung (22) hat; daß die Öffnung (62) der Scheibe so auf der Einfassung (22) montiert ist, daß sie um die Achse gedreht werden kann, daß die Scheibe (24) längs der Einfassung (22) zu einer ersten axialen Position und um einen Abstand axial bewegbar ist, der für das Nockenelement auf der Scheibe (24) ausreicht, um das Nockenelement auf dem Befestigungskörper (36) passieren zu lassen, wenn die Scheibe (24) auf der Einfassung (22) um die Achse gedreht wird;

daß das Nockenelement (52A-52F) auf der Sicherungsscheibe (24) auf der Einfassung (22) zu einer zweiten axialen Position axial bewegbar ist, in der es mit dem Nockenelement (40A-40F) auf dem Befestigungskörper (36) zum Zusammenwirken mit demselben in Eingriff gebracht werden kann, um die Scheibe (24) gegen ein Verdrehen bezüglich des Befestigungskörpers (36) zu verriegeln, und daß die Einfassung (22) und die Sicherungs-Scheibe (24) ineinandergreifende Mittel (46) haben, die ein Trennen der Sicherungs-Scheibe (24) von der Einfassung (22) verhindern.

2. Befestigungsanordnung nach Anspruch 1, dadurch **gekennzeichnet,** daß die in ein Werkzeug eingeifende Struktur auf dem Befestigungskörper (36) und der Scheibe (24) mit dem selben Werkzeug zum Lösen derselben in Eingriff gebracht werden können.

3. Befestigungsanordnung nach Anspruch 1 oder 2, dadurch **gekennzeichnet,** daß die in ein Werkzeug eingreifende Struktur auf dem Befestigungskörper (36) eine sechsseitige Struktur ist.

4. Befestigungsanordnung nach einem der Ansprüche 1 bis 3, dadurch **gekennzeichnet,** daß die in ein Werkzeug eingreifende Struktur auf der Sicherungs-Scheibe(24) eine sechsseitige Struktur ist.

5. Befestigungsanordnung nach einem der Ansprüche 1 bis 4, dadurch **gekennzeichnet,** daß die Scheibe (24) eine Dicke hat, die größer als die axiale Länge der Einfassung (22) ist.

6. Befestigungsanordnung nach einem der Ansprüche 1 bis 5, dadurch **gekennzeichnet,** daß die in ein Werkzeug eingreifende Struktur auf der Scheibe (24) und die auf dem Befestigungskörper (36) angepaßt sind, gleichzeitig mit einem Mutternschlüssel in Eingriff gebracht zu werden.

7. Befestigungsanordnung nach einem der Ansprüche 1 bis 6, dadurch **gekennzeichnet,** daß ein erster Abschnitt der Scheibe (24) eine in ein Werkzeug eingreifende hexagonale Sektion mit einem ersten Durchmesser hat, und daß ein zweiter Abschnitt der Scheibe (24) eine kreisförmige Anordnung mit größerem Durchmesser hat, wobei der zweite Abschnitt mit dem Werkstück (14) in Eingriff gebracht werden kann.

8. Befestigungsanordnung nach einem der Ansprüche 1 bis 7, dadurch **gekennzeichnet,** daß der Befestigungskörper (36) und die Scheibe (24) zusammenwirkende axial gerichtete Nockenflächen (38,50) haben, die einander gegenüberstehen und die jeweils keilförmige Nockenmittel mit Vorderseiten, die ineinandergreifen, wenn der Befestigungskörper (36) in Spannrichtung gedreht wird, sowie geneigte Rampenflächen mit einem Anstiegswinkel größer als der Steigungswinkel des Gewindes (30) des Befestigungskörpers (36) haben.

9. Befestigungsanordnung nach einem der Ansprüche 1 bis 8, dadurch **gekennzeichnet,** daß die Scheibe (24) einen ersten Körperabschnitt sowie einen innen ausgebildeten zweiten Körperabschnitt hat, wobei der erste Körperabschnitt geformt ist, einen Treibkopf, der die Nockenfläche (50) aufweist, sowie mehrere vertikale Seitenflächen (60) zu bilden, die mit einem Mutternschlüssel in Eingriff gebracht werden können, und wobei der zweite Körperabschnitt durch ein vergrößertes, radial verlaufendes Flanschelement (72) gebildet ist, das eine im wesentlichen flache Reibeingriffsfläche (70) hat, die angepaßt ist, mit der Fläche eines Werkstücks (14) in Eingriff zu kommen, an dem der mit dem Gewinde versehene Befestigungskörper befestigt ist.

10. Befestigungsanordnung nach Anspruch 9, dadurch **gekennzeichnet,** daß die Reibeingriffsfläche (70) eine ringförmige Fläche ist, die im allgemeinen parallel zur Nockenfläche (50) der Scheibe (24) verläuft und der Nockenfläche (50) gegenüberliegt und die eine äußere, im allgemeinen kreisförmige, umlaufende Umrandung hat, deren Durchmesser mindestens so groß ist wie der der werkzeugeingreifenden Struktur auf der Sicherungs-Scheibe (24) und deren Innendurchmesser mindestens so groß wie der Durchmesser der Öffnung (30) des Befestigungskörpers ist, wobei die Einfassung (22) und die Scheibe (24) ineinandergreifende Mittel (46, 80) haben, um ein Trennen der Scheibe (24) von der Einfassung (22) zu verhindern.

**Revendications**

1. Ensemble de fixation pour appliquer de manière libérable une charge à la surface d'une pièce travaillée, comprenant un corps fileté de fixation et une rondelle de blocage, le corps fileté de fixation (36) ayant une ouverture intérieure (30) pratiquée autour d'un axe, et un filetage (32) réalisé selon une configuration cylindrique dans l'ensemble de ladite ouverture (30) autour dudit axe, le corps de fixation (36) ayant une première structure (28) pouvant être saisie par un outil (16) pour la rotation de ce corps de fixation autour dudit axe soit dans une première direction pour serrer ce corps contre une pièce travaillée (14) soit dans la direction opposée pour le desserrage de ce corps par rapport à la pièce travaillée (14), le corps de fixation (36) ayant une surface de came (38) avec un élément de came (40A-40F), une rondelle de blocage (24) ayant une ouverture centrale (62), cette rondelle (24) ayant une surface de came (50) avec un élément de came (52A-52F), la rondelle (24) ayant une structure pouvant être saisie par un outil (16) pour la rotation de cette rondelle (24) autour dudit axe avec le corps (36) pour le desserrage de cette rondelle par rapport à la pièce travaillée (14), caractérisé en ce que le corps de fixation (36) à une jupe (22) s'étendant en sens axial à partir de lui, l'ouverture (62) de la rondelle étant montée sur la jupe (22) de manière à pouvoir tourner autour dudit axe, la rondelle (24) étant déplaçable en sens axial le long de ladite jupe (22) jusqu'à une première position axiale et à une distance suffisante pour que l'élément de came situé sur la rondelle (24) franchisse l'élément de came situé sur le corps (36) lorsque la rondelle (24) tourne sur la jupe (22) autour dudit axe, l'élément de came (52A-52F) situé sur la rondelle de blocage (24) étant déplaçable en sens axial sur la jupe (22) jusqu'à une seconde position en sens axial où elle est en prise avec l'élément de came (40A-40F) situé sur le corps de fixation (36) pour coopérer avec cet élément afin de bloquer la rotation (24) en rotation par rapport au corps de fixation (36), et la jupe (22) et la rondelle de blocage (24) ayant un moyen (46) d'interengagement empêchant la séparation de la rondelle de blocage (24) et de la jupe (22).

2. Ensemble de fixation tel que défini à la revendication 1, caractérisé en ce que les structures pouvant être saisies par un outil se trouvant sur l'élément de fixation (36) et sur la rondelle (24) peuvent être saisies par le même outil pour leur desserrage.

3. Ensemble de fixation tel que défini à la revendication 1 ou la revendication 2, caractérisé en ce que la structure pouvant être saisie par un outil se trouvant sur le corps (36) est une structure à six pans.

4. Ensemble de fixation tel que défini dans l'une quelconque des revendications 1 à 3 caractérisé en ce que la structure pouvant être saisie par un outil se trouvant sur la rondelle de blocage (24) est une structure à six pans.

5. Ensemble de fixation tel que défini dans l'une quelconque des revendications 1 à 4 caractérisé en ce que la rondelle (24) a une épaisseur supérieure à la longueur en sens axial de la jupe (22).

6. Ensemble de fixation tel que défini dans l'une quelconque des revendications 1 à 5 caractérisé en ce que les structures pouvant être saisies se trouvant sur la rondelle (24) et sur le corps de fixation (36) sont adaptées pour être simultanément saisies par une clé.

7. Ensemble de fixation tel que défini dans l'une quelconque des revendications 1 à 6 caractérisé en ce qu'une première partie de la rondelle (24) a une section droite hexagonale d'un premier diamètre pouvant être saisie par un outil et une seconde partie de la rondelle (24) a une configuration circulaire de plus grand diamètre, la seconde partie pouvant s'engager avec la pièce travaillée (14).

8. Ensemble de fixation tel que défini dans l'une quelconque des revendications 1 à 7 caractérisé en ce que le corps de fixation (36) et la rondelle (24) ont des surfaces de came (38, 50) coopérantes dirigées en sens axial, opposées l'une à l'autre, et ayant respectivement un élément de came à profil de coin avec des faces frontales venant en inter-engagement lorsque le corps de fixation (36) est en rotation dans le sens du serrage et des faces de rampe inclinées avec un angle de montée plus grand que l'angle d'avance de l'élément fileté (30) du corps de fixation (36).

9. Ensemble de fixation tel que défini dans l'une quelconque des revendications 1 à 8 caractérisé en ce que la rondelle (24) a une première partie de corps et une seconde partie de corps formée intérieurement, la première partie de corps étant prévue pour définir une tête d'entraînement ayant la surface de came (50) et une pluralité de faces latérales verticales (60) pouvant être saisies par un outil et la seconde partie de corps étant définie par un élément de bride (72) élargie en sens radial ayant une surface de contact de frottement (70) substantiellement plane adaptée pour venir en contact avec la surface d'une pièce travaillée (14) sur laquelle est fixé le moyen de fixation fileté.

10. Ensemble de fixation tel que défini dans la revendication 9 caractérisé en ce que la surface de contact par frottement (70) est une surface annulaire plane dans l'ensemble et opposée à la surface de came (50) de la rondelle (24) et ayant un bord extérieur circonférentiel, circulaire dans l'ensemble, avec un diamètre au moins aussi grand que celui de la structure pouvant être saisie par un outil se trouvant sur la rondelle de blocage (24) et avec un diamètre intérieur au moins aussi grand que le diamètre de l'ouverture (30) du corps de fixation, la jupe (22) et la rondelle (24) ayant des moyens d'inter-engagement (46, 80) pour empêcher la séparation de la rondelle (24) et de la jupe (22).

Fig. 1

Fig. 2

Fig. 3

Fig. 4

Fig. 5

Fig. 6

Fig. 7

Fig. 8

Fig. 9